# EUROPEAN PATENT APPLICATION

(11) **EP 0 811 476 A1**
(43) Date of publication of application: **10.12.1997**
(21) Application number: 96830330.5
(22) Date of filing: 06.06.1996
(51) Int. Cl.: B29D 22/00, B29C 53/06

(54) **Method for manufacturing a bellows, and associated bellows**

(71) Applicant: TECNIMETAL S.r.l., 26037 San Giovanni in Groce (IT)
(72) Inventor: Ardigo, Cesare, 26030 Solarolo Raineiro (IT); Morselli, Marco, 46017 Cividale di Rivarolo (IT); Ariazzi, Achille, 26030 Casteldidone (IT)
(74) Representative: Gotra, Stefano

(57) **Abstract**

The invention is concerned with the sector of industrial bellows and in particular relates to a method in which the manufacturing stage of each shaped frame of the bellows involves cutting or milling of a substantially straight portion (1) of material forming the frame, in which seats or incisions are formed depending on the final shape desired. The portion (1) is then bent in the region of the seats or incisions (2) so as to obtain the desired frame shape. Fixing means (3) are then applied in order to fix the position of the portion after bending.

The invention also relates to a bellows in which each shaped frame comprises a plurality of seats or incisions (2) into which fixing means (3) formed so as to give the shaped frame the required shape are inserted.

This results in a reduction of the processing waste and processing time as well as a more economical product.

## Description

The present invention relates to a method for manufacturing a bellows, and to an associated bellows.

The present method is used in particular for the manufacture of industrial bellows of the type obtained by means of high-frequency welding or heat welding of a pliable external fabric or covering to a plurality of shaped frames which form the skeleton of the bellows.

According to the known art, a plurality of shaped plastic frames are cut, producing a considerable amount of waste which is all the greater the more complex the shape of the frames.

The pliable external cloth or fabric of the bellows is then applied onto said frames by means of high-frequency welding or heat welding.

It is obvious that, each time the shape or format of the frame is changed, the electrodes or the arrangement of the electrodes intended to perform heat welding must also be changed, with the consequent loss of time, or else a succession of rectilinear welds must be performed, during separate operations, on each side of the frame.

The object of the present invention is that of eliminating the aforementioned drawbacks and providing a method which makes it possible to reduce to a minimum the amount of waste resulting from cutting of the shaped frames in order to produce the bellows and, at the same time, avoid having to replace the welding electrodes when the format of the frames is changed.

Said objects are fully achieved by the method for manufacturing a bellows, forming the subject of the present invention, which is characterized by the contents of the claims below and in particular by the fact that the manufacture of each shaped frame involves the cutting or milling of a substantially straight portion of material forming the frame, in which seats or incisions are formed depending on the final shape required.

According to the method, the subsequent shaping of the portion is obtained by means of bending in the region of the seats or incisions so as to obtain the desired shape of frame; moreover, according to the method, fixing means are applied in order to fix the position of the portion after bending.

The pliable covering of the bellows may be applied directly onto the straight portion prior to shaping of the latter.

The present invention also relates to a bellows manufactured in accordance with the aforementioned method, which is characterized by the contents of the claims below and in particular by the fact that each shaped frame, forming the bellows, is provided with a plurality of seats or incisions in the region of which fixing means are applied, said fixing means being formed so as to give the frame a predetermined shape.

These and other characteristic features will emerge more clearly from the following description of a preferred embodiment illustrated, purely by way of a non-limiting example, in the accompanying illustrative plates, in which:
- Figures 1, 2 and 3 show three successive stages of the method;
- Figures 4, 5 and 6 show a front view, plan view and side view, respectively, of a detail of the fixing means.

With reference to the Figures, 1 denotes a substantially straight portion of material, preferably plastic, obtained by means of cutting or milling from a sheet of said material.

Several portions 1 are obtained from a same sheet of material by means of cutting or milling, each of said portions being structured so as to produce a shaped frame for the manufacture of a bellows.

Each portion 1 comprises a plurality of incisions or seats 2, formed during cutting or milling, which may be of varying breadth, depending on the final desired shape of the frame.

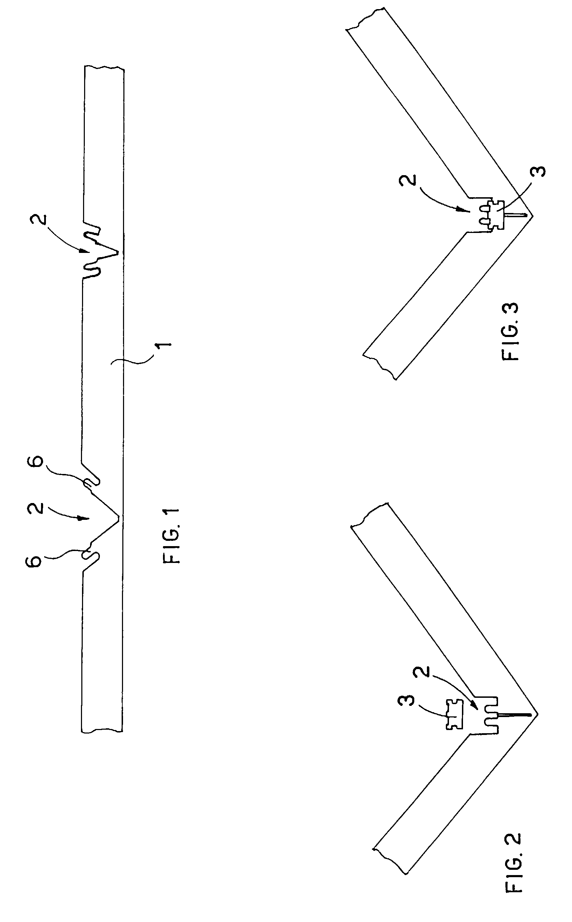

Following the cutting or milling stage, according to the method forming the subject of the present invention, shaping of the portion 1 is performed by means of bending in the region of the incisions 2 and it is obvious that incisions of greater breadth correspond to shaped frames with smaller angles, as is obvious from that shown in Figure 1.

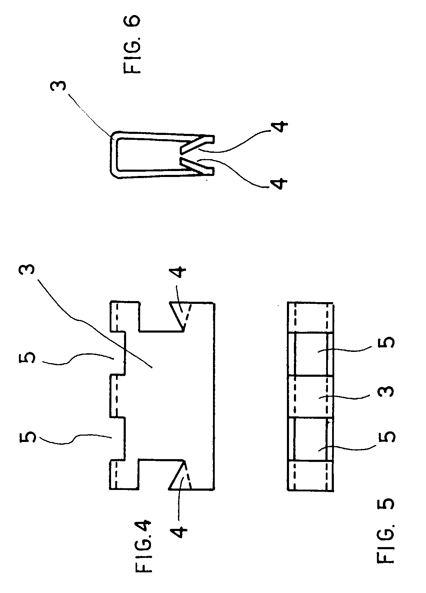

After bending, the portion assumes the appearance shown in Figure 2 and has applied to it fixing means 3 formed so as to ensure that the portion 1 retains the configuration assumed after bending.

Said fixing means consist of clips, preferably made of metal, illustrated in greater detail in Figure 4 to 6.

Each clip 3 is substantially in the form of a U-piece provided with four ends 4 which are bent towards the inside of the clip and intended to grip against the surface of the portion 1, on both sides of the portion itself, so as to prevent the clip from coming out of its seat.

Each clip is moreover provided with two holes 5 formed in the back thereof, through which two corresponding engaging elements 6 present on the portion 1 and formed during cutting or milling are inserted. In order to complete manufacture of the bellows, an external pliable covering is welded onto the portions 1, which form the framework of the bellows.

The present method provides the original possibility of welding the pliable covering onto the portion 1 prior to shaping or bending of the latter, so that, for any final shape of the portion and therefore for any type of shaped frame, application of the covering may be performed in the same manner and using the same welding means, without the need for varying the configuration and position of the welding means.

Moreover, with this solution welding of a frame is performed in a single stage, independently of the number of sides of the frame, whereas with the traditional methods a welding stage is required for each side of the frame.

A further advantage achieved by the present method and by the present bellows consists in the substantial reduction in cutting waste owing to the fact that substantially straight portions of material are cut.

## Claims

1. Method for manufacturing a bellows, of the type comprising the following stages:
- manufacture of at least one shaped frame for the bellows;
- application of a pliable covering to at least one shaped frame,
characterized in that the manufacturing stage for each shaped frame involves:
- cutting or milling of a substantially straight portion (1) of material forming the frame, in which seats or incisions (2) are formed depending on the final shape desired;
- shaping of the portion (1) by means of bending in the region of the seats or incisions (2), so as to obtain the desired frame shape;
- application of fixing means (3) so as to fix the position of the portion after bending.

2. Method according to Claim 1, characterized in that application of the covering is performed directly onto the substantially straight portion (1) prior to shaping and bending of the latter.

3. Method according to Claim 1, in which the seats or incisions (2) are cut or milled so that the width or breadth of these seats or incisions is inversely proportional to the internal bending or shaping angle required for the frame.

4. Bellows of the type comprising a plurality of shaped frames and a pliable covering applied to said frame by means of heat welding or high-frequency welding, characterized in that each shaped frame comprises a plurality of seats or incisions (2) into which fixing means (3) formed so as to give the shaped frame the required shape are inserted.

5. Bellows according to Claim 4, in which said seats or incisions (2) are shaped so as to have engaging elements (6) which combine with the fixing means (3).

6. Bellows according to Claim 4, in which said fixing means consist of clips.

7. Bellows according to Claim 6, in which said clips are substantially in the form of a U-piece provided with at least one hole (5) formed in the back thereof, engaging elements (6) present on the portion (1) being inserted into said at least one hole (5).
